# EUROPÄISCHE PATENTSCHRIFT

(11) **EP 0 816 648 B1**
(45) Veröffentlichungstag und Bekanntmachung des Hinweises auf die Patenterteilung: **08.08.2001**
(21) Anmeldenummer: 97111196.8
(22) Anmeldetag: 03.07.1997
(51) Int. Cl.: F01N 3/28, F01N 1/06, F01N 1/08, F01N 1/24

(54) **Schalldämpfer für Kraftfahrzeuge**
Silencer for motor vehicle
Silencieux pour véhicules automobiles

(30) Priorität: 04.07.1996 DE 19626980
(43) Veröffentlichungstag der Anmeldung: 07.01.1998
(73) Patentinhaber: ROTH-TECHNIK AUSTRIA Gesellschaft m.b.H., 3193 St. Aegyd/Neuwalde (AT); MAN Nutzfahrzeuge Aktiengesellschaft, 80995 München (DE)
(72) Erfinder: Kreutmair, Josef, 85276 Pfaffenhofen (DE); Knetsch, Holger, 85221 Dachau (DE); Mai, Hans-Peter, 76572 Gaggenau (DE)
(74) Vertreter: Säger, Manfred, Dipl.-Ing.

(56) Entgegenhaltungen:
- DE-A- 19 522 935
- DE-U- 29 512 732
- FR-A- 2 678 681
- US-A- 3 445 196

## Beschreibung

Die Erfindung betrifft einen Schalldämpfer gemäß dem Oberbegriff des Hauptanspruchs.

Solche sogenannten kombinierten Schalldämpfer-Katalysatoren sind an sich bekannt, z. B. aus der DE-U-29 512 732.

Der Erfindung liegt die Aufgabe zugrunde, einen Schalldämpfer gemäß dem Oberbegriff des Hauptanspruchs so auszubilden, daß das Äußere des Katalysators aufgewärmt wird.

Diese Aufgabe wird bei einem gattungsgemäßen Schalldämpfer gemäß dem Oberbegriff des Hauptanspruchs erfindungsgemäß durch dessen kennzeichnende Merkmale gelöst.

Der Stand der Technik gemäß Fig. 3 der **US-A-3 445 196** offenbart Folgendes :
im zylindrischen Schalldämpfergehäuse sind (zumindest) zwei Zwischenwände 96,98 vorgesehen;
ein Abgas-einlaß 30a erstreckt sich durch die zwischen der ersten Endwand 26a und der Zwischenwand 96 gebildeten ersten Kammer in die zweite Kammer (zwischen 96 und 98 unterteilt in Unterkammern durch eine weitere Wand 94);
Abgas fließt aus dem Rohr 30a um den Katalysator 66 in der zweiten Kammer,
   durch Öffnungen in der Wand 96 in die erste Kammer
   und dann durch den Katalysator 66/66a, dessen Austrittsöffnung sich in der hinteren, dritten Kammer zwischen der Wand 98 und der Schalldämpferendfläche befindet;
von dort, aus der dritten Kammer, wird Abgas durch das Austrittsrohr 32a wegbefördert.
Der Katalysator 66 erstreckt sich auch von seinem Eintritt 68a -in der ersten Zwischenwand- bis zur zweiten Zwischenwand, hin zu seinem Austritt (auch mit 68a bezeichnet).

Ein bevorzugtes Ausführungsbeispiel wird nachfolgend unter Bezugnahme auf die Zeichnung näher erläutert. In dieser zeigt:
Figur 1 einen Schalldämpfer mit Katalysator, im schematischen Querschnitt und
Figur 2 einen Schnitt II-II gemäß Figur 1

Der insgesamt mit 5 bezeichnete Schalldämpfer weist zwei Böden 6,7 auf, die im wesentlichen parallel zueinander angeordnet sind und über einen insgesamt mit 8 bezeichneten Mantel miteinander verbunden sind. Durch den einen Boden 6 ist das Abgaseintrittsrohr 9 hinein- und das Abgasaustrittsrohr 10 herausgeführt.

Im Inneren des Schalldämpfers 5 ist, benachbart zu dem einen Boden 6, eine erste Zwischenwand 11 und benachbart zu dem anderen Boden 7 eine zweite Zwischenwand 12 angeordnet, und zwar unter Bildung einer Mittelkammer 13, zwischen den beiden Zwischenwänden 11, 12 und einer ersten äußeren Kammer 14, benachbart zu dem einen Boden 6 und einer zweiten äußeren Kammer 15, benachbart zu dem anderen Boden 7.

Das Abgaseintrittsrohr 9 ist von dem einen Boden 6 zu der ersten Zwischenwand 11 geführt und mündet in der Mittelkammer 13. Es ist mit einer Perforation 16 versehen, die in die erste äußere Kammer 14 mündet. Ferner ist die erste Zwischenwand 11 ebenfalls mit Öffnungen 17 versehen, so daß das einströmende Abgas vom Abgaseintrittsrohr über die Perforationen 16 sowohl in die erste äußere Kammer 14 als auch dahin über die Mittelkammer 13 und die Öffnungen 17 gelangen kann.

Ferner ist ein insgesamt mit 18 bezeichneter Katalysator, vorzugsweise ein keramischer Monolith, sowohl an der ersten Zwischenwand 11 als auch an der zweiten Zwischenwand 12 unter gasdichter Durchquerung der Mittelkammer 13 festgelegt. Er kann hierbei in einer üblichen, an sich bekannten Halterung, beispielsweise einer Halbschale mit Stahlgestrick oder einer Manschette mit Blähton gehaltert sein. Hierbei sind dann die Halbschalen gasdicht ausgeführt und längs ihres Randes an den beiden Zwischenwänden, beispielsweise durch Schweißen, festgelegt. Im Bereich des Katalysators 18 weisen beide Zwischenwände 11, 12 Öffnungen auf. Somit wird das Äußere des Katalysators 18 durch das in die Mittelkammer 13 strömende Abgas aufgewärmt. Infolge der aufgeteilten Einströmung in die erste äußere Kammer 14 ist eine gleichmäßige Einströmung des Katalysatoreingangs (an der ersten Zwischenwand 11) und damit auch eine gute Katalysatorwirkung gegeben. Infolge der Anheizung ist auch ein schnelles Anspringen bei relativ kaltem Abgas von Dieselmotoren sichergestellt.

Nach Durchströmen des Katalysators 18 gelangt das Abgas in die zweite äußere Kammer 15, in die das Abgasaustrittsrohr 10 mündet und von dort sowohl die Mittelkammer 13 als auch die erste äußere Kammer 14 durchquert und an dem einen Boden 6 herausgeführt ist. Das Austrittsrohr 10 weist eine Endrohrabsorption 18 auf, die aus einem mit schalldämmenden oder schalldämpfendem Material 19 versehenen Ringraum besteht, der über eine weitere Perforation 20 mit dem Inneren des Abgasaustrittsrohr 10 verbunden ist.

Der andere Boden 7 weist eine perforierte Wand 20 auf, zwischen der und dem anderen Boden 7 eine mit schalldämmendem Material 21 gefüllte Absorptionskammer angeordnet ist. Somit kann aus dem Katalysator 18 ausströmendes Gas nicht nur in der zweiten äußeren Kammer 15 reflexionsmäßig gedämpft, sondern auch über die Absorptionskammer gedämmt werden, so daß ein relativ beruhigter und schallarmer Abgasstrom in das Abgaseintrittsrohr 10 eintreten kann. Zugleich wird durch die Absorptionskammer mit dem schalldämmenden Material 21 auch ein unerwünschter Körperschall verhindert.

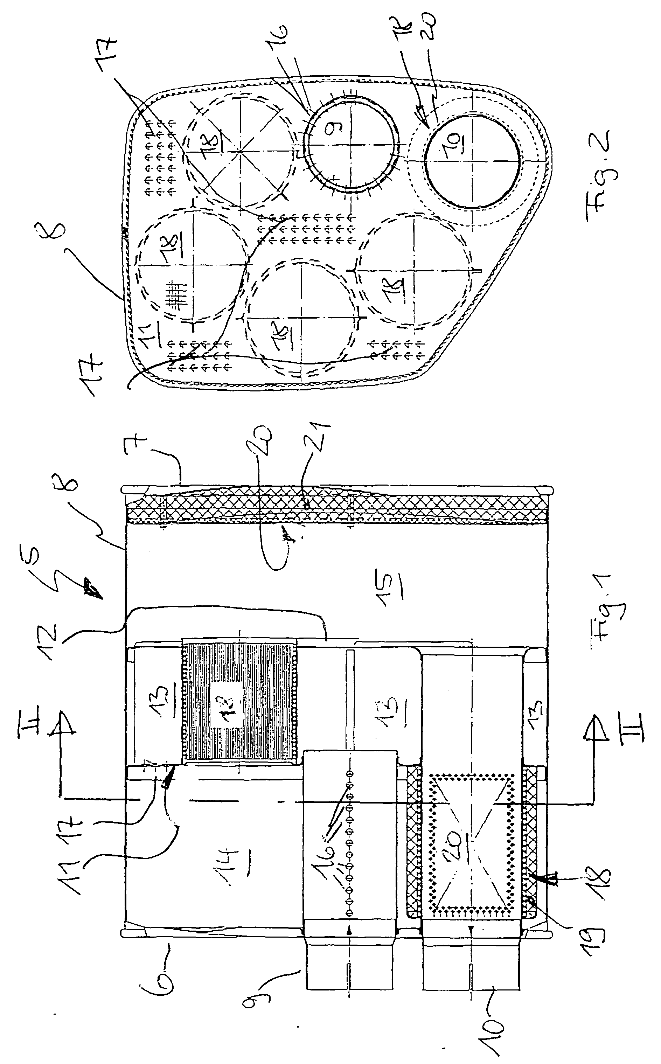

Der Katalysator 18 bzw. mehrere parallel zueinander angeordnete Katalysatoren, vorzugsweise als keramische Monolithen, sind parallel mit Abstand zueinander und vor allem mit Abstand von dem Mantel 8 in gleicher Weise an der ersten Zwischenwand 11 und der zweiten Zwischenwand 12 angebracht, wie schematisch in Figur 2 dargestellt ist.

## Patentansprüche

1. Schalldämpfer (5) im Abgasstrang eines Dieselmotors in Kraftfahrzeugen, der zwei im wesentlichen zueinander parallel angeordnete und über einen Mantel (8) miteinander verbundene Böden (6, 7) zumindest ein Abgaseintrittsrohr (9) sowie ein Abgasaustrittsrohr (10), wenigstens einen Katalysator (18) sowie eine erste, vordere Zwischenwand (11) und eine zweite, hintere Zwischenwand (12) aufweist, wobei der vordere Boden (6) und die vordere Zwischenwand (11) eine erste vorderre Kammer (14) begrenzen, die beiden voneinander beabstandeten Zwischenwände (11, 12) eine zweite mittlere Kammer (13) begrenzen und die hintere Zwischenwand (12) und der hintere Boden (7) eine dritte, hintere Kammer (15) begrenzen, wobei außerdem die Böden (6, 7) und Zwischenwände (11, 12) im wesentlichen parallel zueinander angeordnet sind und der wenigstens eine Katalysator (18) im Bereich der zweiten Kammer (13) die beiden Zwischenwände (11, 12) verbindend angeordnet ist, dadurch gekennzeichnet, daß der zumindest eine Katalysator (18) sich mit seiner Einströmöffnung bei der ersten Zwischenwand von der ersten Zwischenwand (11) zur zweiten Zwischenwand (12) erstreckt und mit seiner Abströmöffnung in die hintere Kammer (15) ausmündet, daß ferner das Abgaseintrittsrohr (9) die erste, vordere Kammer (14) durchdringt, bis zur ersten Zwischenwand (11) geführt ist, in die mittlere Kammer (13) ausmündet und dieser Abgas zur Umspülung und Vorwärmung des wenigstens einen Katalysators (18) zuführt, und daß außerdem die erste Zwischenwand (11) Öffnungen (17) für die Überleitung des Abgases aus der mittleren Kammer (13) zurück zur ersten, vorderen Kammer (14) aufweist, aus der das Abgas unter Durchströmung des wenigstens einen Katalysators (18) in die dritte, hintere Kammer (15) überführbar und von dort mittels des Abgasaustrittsrohres (10) abführbar ist, und daß die Zwischenwände (11, 12) und der Katalysator (18) derart angeordnet sind, daß das in die mittlere Kammer (13) eintretende Abgas vor dem Ausströmen in die erste Kammer (14) den gesamten Katalysator (18) umströmt.

2. Schalldämpfer nach Anspruch 1, dadurch gekennzeichnet, daß das Abgaseintrittsrohr (9) im Bereich der ersten, vorderen Kammer (14) eine Perforation (16) aufweist, durch die ein Teil des Abgases direkt in die erste, vordere Kammer (14) eintreten kann.

3. Schalldämpfer nach einem der vorhergehenden Ansprüche, dadurch gekennzeichnet, daß das von der dritten, hinteren Kammer (15) abgehende Abgasaustrittsrohr (10) durch die zweite, hintere Zwischenwand (12), die mittlere Kammer (13), die erste, vordere Zwischenwand (11), die erste vordere Kammer (14) und den vorderen Boden (6) hindurch nach außen geführt ist.

4. Schalldämpfer nach Anspruch 1, dadurch gekennzeichnet, daß der wenigstens eine Katalysator (18) eine Katalysatorhalterung aufweist, die seinen Mantel unter Freilassung der Einström- und Ausströmöffnung gasdicht umfaßt.

5. Schalldämpfer nach einem der Ansprüche 1 bis 4, dadurch gekennzeichnet, daß der wenigstens eine Katalysator (18) als keramischer Monolith mit einer Vielzahl von parallel zueinander durchströmten Kanälen ausgebildet ist.

6. Schalldämpfer nach Anspruch 4, dadurch gekennzeichnet, daß der wenigstens eine Katalysator (18) oder dessen Katalysatorhalterung durch die Mittelkammer (13) gasdicht hindurchgeführt ist.

7. Schalldämpfer nach Anspruch 3, dadurch gekennzeichnet, daß das Abgasaustrittsrohr (10) im Bereich der ersten, vorderen Kammer (14) eine Endrohrabsorption aufweist.

8. Schalldämpfer nach Anspruch 7, dadurch gekennzeichnet, daß die Endrohrabsorption eine in einen Ringraum mündende Perforation aufweist.

9. Schalldämpfer nach Anspruch 8, dadurch gekennzeichnet, daß in dem Ringraum schalldämmendes oder schalldämpfendes Material (19) angeordnet ist.

10. Schalldämpfer nach Anspruch 1, dadurch gekennzeichnet, daß parallel zu dem hinteren Boden (7) eine perforierte Wand und zwischen dieser und dem hinteren Boden (7) unter Bildung einer Absorptionskammer schalldämmendes oder schalldämpfendes Material (21) angeordnet ist.

11. Schalldämpfer nach einem der Ansprüche 1 bis 6, dadurch gekennzeichnet, daß im Bereich der zweiten, mittleren Kammer (13) mehrere achsparallel zueinander angeordnete Katalysatoren (18) mit einem auf die Größe des fahrzeuginternen Motors und die daraus resultierende Abgasmenge abgestimmten Gesamtvolumen vorgesehen sind.

## Claims

1. A silencer (5) in the exhaust system of a diesel engine in motor vehicles, which has two end plates (6, 7) which are arranged in substantially mutually parallel relationship and which are connected together by way of a casing (8), at least one exhaust gas intake pipe (9) and an exhaust gas outlet pipe (10), at least one catalyst (18), and a first front intermediate wall (11) and a second rear intermediate wall (12), wherein the front end plate (6) and the front intermediate wall (11) define a first front chamber (14), the two mutually spaced intermediate walls (11, 12) define a second central chamber (13) and the rear intermediate wall (12) and the rear end plate (7) define a third rear chamber, wherein moreover the end plates (6, 7) and the intermediate walls (11, 12) are arranged in substantially mutually parallel relationship and the at least one catalyst (18) is arranged in the region of the second chamber (13), connecting the two intermediate walls (11, 12), characterised in that the at least one catalyst (18) extends with its intake flow opening at the first intermediate wall from the first intermediate wall (11) to the second intermediate wall (12) and opens out with its discharge flow opening into the rear chamber (15), that moreover the exhaust gas intake pipe (9) passes through the first front chamber (14), it is taken as far as the first intermediate wall (11) and opens out into the central chamber (13) and feeds same with exhaust gas for flowing around and preheating the at least one catalyst (18), and that in addition the first intermediate wall (11) has openings (17) for conducting the exhaust gas from the central chamber (13) back to the first front chamber (14) from which the exhaust gas, flowing through the at least one catalyst (18), can be transferred into the third rear chamber (15) and from there can be discharged by means of the exhaust gas outlet pipe (10), and that the intermediate walls (11, 12) and the catalyst (18) are arranged in such a way that the exhaust gas which passes into the central chamber (13) flows around the entire catalyst (18) before flowing out into the first chamber (14).

2. A silencer according to claim 1 characterised in that the exhaust gas intake pipe (9) has in the region of the first front chamber (14) a perforation (16) through which a part of the exhaust gas can pass directly into the first front chamber (14).

3. A silencer according to one of the preceding claims characterised in that the exhaust gas outlet pipe (10) which goes from the third rear chamber (15) is passed outwardly through the second rear intermediate wall (12), the central chamber (13), the first front intermediate wall (11), the first front chamber (14) and the front end plate (6).

4. A silencer according to claim 1 characterised in that the at least one catalyst (18) has a catalyst holder which gastightly embraces its casing, leaving the intake flow and discharge flow openings free.

5. A silencer according to one of claims 1 to 4 characterised in that the at least one catalyst (18) is in the form of a ceramic monolith having a plurality of passages through which flows pass in mutually relationship.

6. A silencer according to claim 4 characterised in that the at least one catalyst (18) or its catalyst holder is passed gas-tightly through the central chamber (13).

7. A silencer according to claim 3 characterised in that in the region of the first front chamber (14) the exhaust gas outlet pipe (10) has an end pipe absorption means.

8. A silencer according to claim 7 characterised in that the end pipe absorption means has a perforation opening into an annular space.

9. A silencer according to claim 8 characterised in that sound absorbing or sound-damping material (19) is arranged in the annular space.

10. A silencer according to claim 1 characterised in that a perforated wall is arranged parallel to the rear end plate (7) and arranged between the perforated wall and the rear end plate (7) is sound absorbing or sound-damping material (21), forming an absorption chamber.

11. A silencer according to one of claims 1 to 6 characterised in that provided in the region of the second central chamber (13) are a plurality of catalysts (18) arranged with their axes in parallel relationship, ofan overall volume matched to the size of the engine internal to the vehicle and the amount of exhaust gas resulting therefrom.

## Revendications

1. Silencieux (5) situé dans la tuyauterie des gaz d'échappement d'un moteur diesel sur des véhicules à moteur, comprenant deux fonds (6, 7) disposés essentiellement parallèlement l'un à l'autre et reliés l'un à l'autre par l'intermédiaire d'une enveloppe (8), au moins un tuyau d'entrée des gaz d'échappement (9), ainsi qu'un tuyau de sortie des gaz d'échappement (10), au moins un catalyseur (18), ainsi qu'une première paroi intermédiaire avant (11) et une deuxième paroi intermédiaire arrière (12), le fond avant (6) et la paroi intermédiaire avant (11) délimitant une première chambre avant (14), les deux parois intermédiaires (11, 12) écartées l'une de l'autre délimitant une deuxième chambre centrale (13) et la paroi intermédiaire arrière (12) et le fond arrière (7) délimitant une troisième chambre arrière (15), les fonds (6, 7) et les parois intermédiaires (11, 12) étant en outre disposés essentiellement parallèlement les uns aux autres et le catalyseur (18) au moins unique étant placé dans la zone de la deuxième chambre (13) en reliant les deux parois intermédiaires (11, 12), caractérisé en ce que le catalyseur au moins unique (18) s'étend, avec son orifice d'admission placé sur la première paroi intermédiaire, entre la première paroi intermédiaire (11) et la deuxième paroi intermédiaire (12) et débouche, avec son orifice de sortie, dans la chambre arrière (15), en ce que, en outre, le tuyau d'entrée des gaz d'échappement (9) traverse la première chambre avant (14), va jusqu'à la première paroi intermédiaire (11), débouche dans la chambre centrale (13) et amène à ladite chambre des gaz d'échappement pour laver et réchauffer le catalyseur au moins unique (18) et en ce que, en outre, la première paroi intermédiaire (11) est munie d'orifices (17) pour ramener les gaz d'échappement venant de la chambre centrale (13) dans la première chambre avant (14) d'où ils peuvent être conduits, en traversant le catalyseur au moins unique (18), dans la troisième chambre arrière (15) et, de là, évacués au moyen du tuyau de sortie des gaz d'échappement (10) et en ce que les parois intermédiaires (11, 12) et le catalyseur (18) sont disposés de telle manière que les gaz d'échappement entrant dans la chambre centrale (13) circulent autour de tout le catalyseur (18) avant de sortir dans la première chambre (14).

2. Silencieux suivant la revendication 1, caractérisé en ce que le tuyau d'entrée des gaz d'échappement (9) présente, dans la zone de la première chambre avant (14), une perforation (16) par laquelle une partie des gaz d'échappement peut entrer directement dans la première chambre avant (14).

3. Silencieux suivant l'une des revendications précédentes, caractérisé en ce que le tuyau de sortie des gaz d'échappement (10) partant de la troisième chambre arrière (15) traverse la deuxième paroi intermédiaire arrière (12), la chambre centrale (13), la première paroi intermédiaire avant (11), la première chambre avant (14) et le fond avant (6) puis sort à l'extérieur.

4. Silencieux suivant la revendication 1, caractérisé en ce que le catalyseur au moins unique (18) possède un support qui entoure son enveloppe de manière étanche aux gaz en laissant libres les orifices d'entrée et de sortie.

5. Silencieux suivant l'une des revendications 1 à 4, caractérisé en ce que le catalyseur au moins unique (18) est conçu comme un monolithe céramique avec un grand nombre de canaux parallèles traversés par les gaz.

6. Silencieux suivant la revendication 4, caractérisé en ce que le catalyseur au moins unique (18) ou son support traverse la chambre centrale (13) de manière étanche aux gaz.

7. Silencieux suivant la revendication 3, caractérisé en ce que le tuyau de sortie des gaz d'échappement (10) présente une absorption à son extrémité dans la zone de la première chambre avant (14).

8. Silencieux suivant la revendication 7, caractérisé en ce que l'absorption d'extrémité de tuyau présente une perforation débouchant dans un espace circulaire.

9. Silencieux suivant la revendication 8, caractérisé en ce qu'un matériau insonorisant ou amortissant le bruit (19) est placé dans l'espace circulaire.

10. Silencieux suivant la revendication 1, caractérisé en ce qu'une paroi perforée est disposée parallèlement au fond arrière (7) et qu'un matériau insonorisant ou amortissant la bruit (21) est placé entre la dite paroi et le fond arrière (7) en formant une chambre d'absorption.

11. Silencieux suivant l'une des revendications 1 à 6, caractérisé en ce que, dans la zone de la deuxième chambre centrale (13), plusieurs catalyseurs (18) dont les axes sont disposés parallèlement les uns aux autres possèdent un volume total adapté à la grosseur du moteur interne du véhicule et à la quantité de gaz d'échappement qui en résulte.
